(19) Europäisches Patentamt
European Patent Office
Office européen des brevets

(11) **EP 3 409 815 B1**

(12) **EUROPEAN PATENT SPECIFICATION**

(45) Date of publication and mention
of the grant of the patent:
**05.08.2020 Bulletin 2020/32**

(51) Int Cl.:
***C23C 18/50*** *(2006.01)*  ***G11B 5/858*** *(2006.01)*

(21) Application number: **17174363.6**

(22) Date of filing: **02.06.2017**

(54) **ELECTROLESS NICKEL ALLOY PLATING BATHS, A METHOD FOR DEPOSITION OF NICKEL ALLOYS, NICKEL ALLOY DEPOSITS AND USES OF SUCH FORMED NICKEL ALLOY DEPOSITS**

STROMLOSE NICKELLEGIERUNGPLATTIERUNGSBÄDER, VERFAHREN ZUR ABLAGERUNG VON NICKELLEGIERUNGEN, NICKELLEGIERUNGSABLAGERUNGEN UND VERWENDUNG SOLCHER AUSGEBILDETEN NICKELLEGIERUNGSABLAGERUNGEN

BAINS DE PLACAGE D'ALLIAGE DE NICKEL AUTOCATALYTIQUE, PROCÉDÉ DE DÉPÔT D'ALLIAGES DE NICKEL, DÉPÔTS D'ALLIAGE DE NICKEL ET UTILISATIONS DES DÉPÔTS D'ALLIAGE DE NICKEL AINSI FORMÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.12.2018 Bulletin 2018/49**

(73) Proprietor: **Atotech Deutschland GmbH**
**10553 Berlin (DE)**

(72) Inventor: **Lang, Sebastian**
**10553 Berlin (DE)**

(74) Representative: **Atotech Deutschland GmbH**
**Intellectual Property**
**Erasmusstraße 20**
**10553 Berlin (DE)**

(56) References cited:
**EP-A1- 3 034 650      JP-A- H0 317 278**
**JP-A- S60 103 181      JP-A- S60 149 785**
**US-A1- 2008 241 406      US-A1- 2011 059 611**

## Description

### Field of the Invention

The present invention concerns electroless nickel alloy plating baths, a method for deposition of nickel alloys, nickel alloy deposits and uses of such nickel alloy deposits. Said nickel alloy deposits are *inter alia* suitable for use in the electronics industry being particular useful in the manufacturing of rigid memory disks.

### Background of the Invention

The enhancement of storage capacities for consistent sizes of standard storage media is still one major challenge facing the rigid memory disk (RMD) industry. By moving from Longitudal Magnetic Recording technique (LMR), that recorded magnetized sections longitudally and in parallel to the media's surface, to the Perpendicular Magnetic Recording (PMR) procedure, where magnetic sections are laid vertically into the layer's depth, higher storage densities have been enabled at same media areas. A further advance in data density can only be gained by reduction of bit dimensions. Irrespective of its physical size, a bit consists of a defined number of magnetizable grains like CoCrPt that allow for stable data storage. If the grain diameter is reduced further, more bits can be set on the same area which means an increased areal storage density/capacity. However, the miniaturization of these strong ferromagnetic grains is physically limited by the superparamagnetic effect. By underrunning a certain grain volume, higher sensitivities to thermal excitation are obtained which will cause a spontaneous loss of magnetization and, thus, of stored information. Therefore, it is attempted for rigid memory disks to use materials that offer high coercivities. But these are only applicable as long as write heads are able to re-magnetize them. Each reduction in volume is inevitably accompanied with an inverse proportional increase of the grains' magnetic anisotropy, which characterizes the energy needed as magnetic field strength H to align their magnetic fields during writing processes on the memory disk to form a bit. Due to the hard limiting factor of magnetic anisotropy, the traditional technology of PMR seems incapable of further substantial improvements because it is no longer technical feasible for write-heads to generate such strong magnetic fields. At this point, the implementation of the new Heat Assisted Magnetic Recording (HAMR) technology could offer the possibility to overcome the grains' high anisotropic barrier by using the principle of Curie temperature ($T_{Curie}$). Curie temperature is a critical material depended temperature and characteristic for ferromagnetic materials that will lose their permanent magnetism when $T_{Curie}$ is obtained. By utilizing laser energy, the temperature of magnetic sections is elevated close to $T_{Curie}$. Thus, the high media switching field is dropped and data writing at smaller magnetic fields is feasible again which conventional write heads are able to generate. Due to the necessary heating of the ferromagnetic storage layer to an estimated temperature of 400 °C or even 450°C, a temporary heat transition down to the backing paramagnetic nickel alloy layer must be considered as well. The nickel alloy layer as carrier layer for the subsequently sputtered storage deposit is an essential part because of its excellent corrosion resistance and superior polishing properties. But in case of exposure to critical temperatures for a period of time, the amorphous nickel alloy layer is affected by phase transformations. The formerly amorphous structure will crystallize increasingly and will lose its important paramagnetic property. With growing crystallization fraction the ferromagnetic property increases. This may cause interferences and data loss during write and read actions of the rigid memory disk. It is highly desirable that the paramagnetic properties of the used nickel alloy layers are not lost when they are heated to high temperatures such as 400 °C. In case of exposure to temperatures of 300°C or higher, typical paramagnetic coatings (such as nickel alloys) turn increasingly superparamagnetic or even ferromagnetic because of phase transformations from an amorphous to a crystalline state are taking place. Typically, it can be stated that higher temperatures effect a much faster transition from amorphous to crystalline state of such nickel alloy deposits resulting in a loss of their paramagnetic properties.

JP H05-263259 discloses a Ni-P-Mo electroless plating bath containing 4-8 g/l of a water-soluble nickel, 0.01-1 g/l of a water-soluble molybdate and further hypophosphorous acid or its salt. Two types of dicarboxylic acids or an oxydicarboxylic acid and a dicarboxylic acid are used as complexing agents. These baths give nickel alloy deposits which quickly lose their non-magnetic properties (typically within a few minutes) when subjected to temperatures exceeding 300 °C. This makes such deposits unsuitable for use in (high-end) rigid memory disks using the HAMR technology.

US 2011/0059611 A1 discloses a solution for the deposition of barrier layers on metal surfaces, which comprises compounds of the elements nickel and molybdenum, at least one first reducing agent selected from among secondary and tertiary cyclic aminoboranes and at least one complexing agent, where the solution has a pH of from 8.5 to 12.

EP 3034650 A1 relates to additives suitably used in electroless metal plating baths, electroless plating baths using said additives for electroless plating of metals such as copper, nickel and cobalt as well as metal alloys such as nickel-phosphorous and cobalt-tungsten-phosphorous alloys.

## Objective of the present Invention

It is therefore an objective of the present invention to provide an electroless nickel alloy plating bath which allows for nickel alloy deposits to be formed which do not lose their paramagnetic properties at elevated temperatures, especially if being subjected to elevated temperatures for a prolonged time.

It is a further objective of the present invention to provide an electroless nickel alloy plating bath which is stable and does not show any plate-out.

It is yet a further objective of the present invention to provide an electroless nickel alloy plating bath having a sufficient plating rate.

It is still another objective of the present invention to provide an electroless nickel alloy plating bath which produces nickel alloy deposits well-adhering to the underlying substrate surface, for example when plated on metal surfaces such as aluminum or aluminum alloys.

It is therefore an objective of the present invention to provide an electroless nickel alloy plating bath which allows for nickel alloy deposits to be formed which can be used in rigid memory disks based on the HAMR technology, e.g. as carrier layer for the storage deposit layer.

## Summary of the Invention

Above-captioned objectives are solved by the electroless nickel alloy plating bath according to the invention, its use and the method for depositing a nickel alloy on at least one surface of a substrate.

The electroless nickel alloy plating bath according to the invention comprises

    a) nickel ions;
    b) further reducible metal ions consisting of molybdenum ions;
    c) at least one reducing agent suitable to reduce the nickel ions and the further reducible metal ions to their respective metallic state; and
    it is characterized in that it further comprises
    d) at least three complexing agents CA1, CA2 and CA3
    wherein each of CA1, CA2 and CA3 is independently selected from the group consisting of compounds having at least two carboxylic acid moieties, the respective salts thereof as well as mixtures of the aforementioned.

The at least three complexing agents CA1, CA2 and CA3 are different compounds having at least two carboxylic acid moieties, the respective salts thereof as well as mixtures of the aforementioned, wherein according to claim 1

- the complexing agent CA1 is an unfunctionalized aliphatic C2-C12-dicarboxylic acid or a salt thereof,
- the complexing agent CA2 is a hydroxy-functionalized aliphatic C3-C12-dicarboxylic acid or a salt thereof,
- the complexing agent CA3 is a functionalized or unfunctionalized aliphatic C5-C12-tricarboxylic acid or a salt thereof.

The electroless nickel alloy plating bath according to the invention is used to deposit a nickel alloy onto at least one surface of at least one substrate.

A method for depositing a nickel alloy on at least one surface of a substrate comprising in this order the following method steps

    A) providing the substrate comprising the at least one surface;
    B) contacting the at least one surface of the substrate with an electroless nickel alloy plating bath according to the invention and

thereby depositing a nickel alloy on the at least one surface of the substrate.

A nickel alloy deposit is obtainable by deposition from an electroless nickel alloy plating bath.

A nickel alloy deposit can be used in a data storage device, preferably as a non-magnetizable layer, more preferably in a rigid memory disc.

A data storage device, preferably a rigid memory disc, preferably using heat-assisted magnetic recording (HAMR), comprises at least one nickel alloy deposit.

The electroless nickel alloy plating bath according to the invention and the method of the present invention are suitable to provide nickel alloy deposits which do not (substantially) lose their paramagnetic properties while being subjected to elevated temperatures such as 330 °C, 350 °C or even 400 °C, even for a prolonged period of time such as 60 min or more. Advantageously, said nickel alloy deposits do not become superparamagnetic or ferromagnetic even at 400 °C for 60 min or more (and are thus non-magnetizable).

The electroless nickel alloy plating bath according to the invention and the methods of the present invention are suitable to provide nickel alloy deposits having an attractive bright or semi-bright appearance. Further, the nickel alloy deposits adhere well to the underlying substrate surface.

The electroless nickel alloy plating bath according to the invention are stable and do not show plate-out during plating for a sufficient period of time to be used economically, typically for at least 240 min.

## Brief description of the Figures

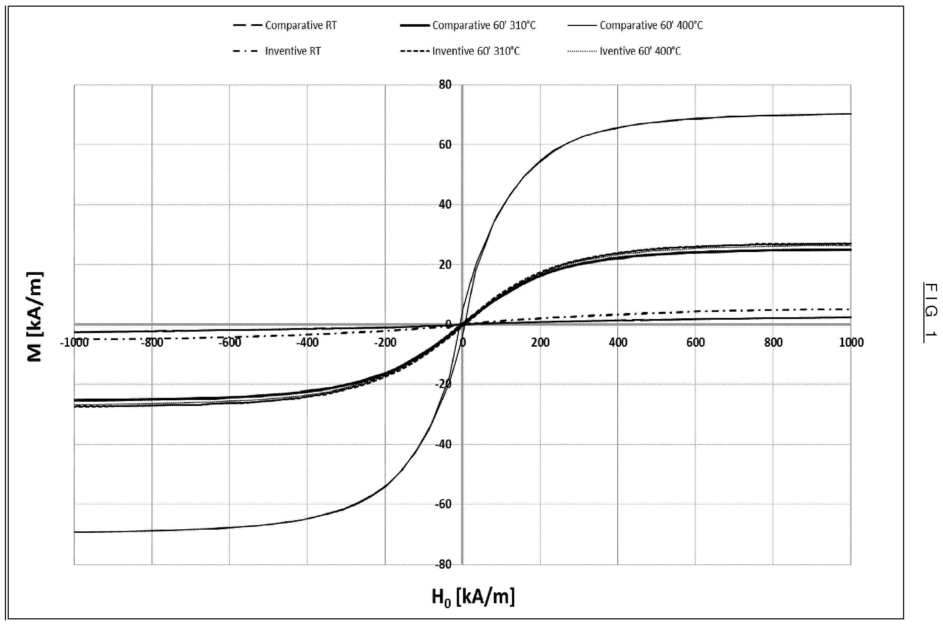

Figure 1 shows VSM measurements of a nickel alloy obtained from an inventive electroless nickel alloy plating bath and those of a comparative nickel plating bath after plating and after being treated at various temperatures (310 °C for 60 min and 400 °C for 60 min). Only the nickel alloy deposits formed with the inventive electroless nickel alloy plating bath keep their paramagnetic properties after being treated at 310 °C for 60 min and 400 °C for 60 min and during heat treatment, respectively, while the comparative nickel alloy deposits lost their paramagnetism.

## Detailed Description of the Invention

Percentages throughout this specification are weight-percentages (wt.-%) unless stated otherwise. Concentrations given in this specification refer to the volume or mass of the entire solutions unless stated otherwise. The terms "deposition" and "plating" are used interchangeably herein. Also, "layer" and "deposit" are also used synonymously in this specification. Plate-out means the undesired decomposition of a plating bath. It is understood that embodiments of the present invention described in this specification can be combined unless this is technically not feasible or specifically excluded.

A carboxylic acid moiety in the context of the present invention is a -C(=O)OH group. The term "CX-CY-compound" according to the present invention refers to compounds having X to Y carbon atoms (including the carbon atoms of any carboxylic acid moieties); wherein X and Y refer to natural numbers, and X is smaller than Y.

Nickel alloys obtained by deposition from an electroless nickel alloy plating bath of the present invention comprise the elements nickel and molybdenum, preferably in combination with phosphorus and/or boron, more preferably with phosphorus. Most preferred alloys comprise nickel, molybdenum and phosphorus as their paramagnetic properties were found to be the most stable against elevated temperatures.

Electroless Nickel Alloy Plating Bath according to the Invention

The inventive electroless nickel alloy plating bath comprises nickel ions. The nickel ions can be provided by any water-soluble salt or any water-soluble nickel complex. Preferably, nickel ions are provided by any one of nickel sulfate, nickel chloride, nickel acetate, nickel methyl sulfonate, nickel sulfamate and mixtures thereof.

The concentration of the nickel ions in the electroless nickel alloy plating bath may vary widely and preferably ranges from 0.01 mol/L to 1.0 mol/L, more preferably from 0.03 mol/L to 0.8 mol/L, even more preferably from 0.05 mol/L to 0.1 mol/L.

The inventive electroless nickel alloy plating bath comprises further reducible metal ions (other than nickel ions). The further reducible metal ions according to the invention are selected from the group consisting of molybdenum ions. The further reducible metal ions can be provided by any water-soluble salt or any water-soluble complex of such further reducible metals. Preferably, molybdenum ions are provided by any one of molybdic acid, alkaline molybdate (e.g. $Na_2MoO_4$), ammonium molybdate and mixtures thereof. Not inventive tungsten ions are provided by any one of tungstic acid, alkaline tungstate (e.g. $Na_2WO_4$), ammonium tungstate and mixtures thereof. Not inventive rhenium ions are provided by any one of perrhenic acid, alkaline perrhenate (e.g. $NaReO_4$), ammonium perrhenate and mixtures thereof. Molybdenum ions are preferred because nickel alloy deposits obtained with these ions show outstanding magnetic properties which are particularly stable to elevated temperatures. Insoluble components of molybdenum, rhenium and tungsten such as molybdenum disulfide are detrimental to the nickel alloy deposit properties and are thus preferably not used in the electroless nickel alloy plating bath according to the invention.

The total concentration of the further reducible metal ions in the electroless nickel alloy plating bath may vary and preferably ranges from $5*10^{-5}$ to $1*10^{-2}$ mol/L, preferably from $1*10^{-4}$ to $5*10^{-3}$ mol/L and more preferably from $2.5*10^{-4}$ to $2.5*10^{-3}$ mol/L. If more than one type of further reducible metal ions is contained in the electroless nickel alloy plating bath, the overall concentration of all further reducible metal ions used is preferably in above-defined ranges (*i.e.* the total concentrations thereof).

Concentrations outside above ranges may in some cases be applicable depending on the desired further metal content in the nickel alloy deposit to be formed. Optimal paramagnetic properties are obtained in particular when applying above ranges.

In one embodiment of the present invention, the electroless nickel alloy plating bath does not comprise any additional reducible metal ions other than nickel ions and the further reducible metal ions as their co-deposition might disadvantageously influence the magnetic properties or the stability thereof against elevated temperatures of the nickel alloy deposits. Such additional reducible metal ions are for example cobalt ions. Alkaline and earth alkaline metal ions for example are typically not reducible under the given conditions and therefore, they are not being deposited along with the nickel alloy and thus, do not have any negative effects on the nickel alloy deposits.

The electroless nickel alloy plating bath further comprises at least one reducing agent. The at least one reducing agent is a chemical reducing agent. The at least one reducing agent is suitable to reduce the nickel ions and the further reducible metal ions to their respective metallic state. Preferably, the at least one reducing agent is selected from the group consisting of hypophosphite compounds such as hypophosphorous acid and hypophosphite salts such as alkaline hypophosphite like sodium or potassium hypophosphite, ammonium hypophosphite, nickel hypophosphite and so forth; boron based reducing agent such as aminoboranes like dimethyl aminoboranes (DMAB) and morpholine borane and borohydrides like sodium borohydride; hydrazine; and hydrazine derivatives (hydrazine sulfate, hydrazine hydrochloride, hydrazine hydrate and other such components useable as reducing agent in the context of the present invention). In case a hypophosphite compound is used as the reducing agent, a nickel alloy deposit comprising phosphorus is obtained. Such reducing agents provide the source of phosphorous in the deposited nickel alloy. A borane-based reducing agent leads to a nickel alloy deposit comprising boron and a mixture of hypophosphite compounds and borane-based reducing agents leads to a nickel alloy deposit comprising phosphorus and boron. A nitrogen-based reducing agent such as hydrazine and hydrazine derivatives provide neither phosphorus nor boron to be incorporated into the nickel alloy.

The at least one reducing agent is more preferably selected from the group consisting of hypophosphorous acid, hypophosphite salts and mixtures of the aforementioned. These reducing agents are preferred as the phosphorus being built into the inventive nickel alloys *inter alia* improves the magnetic properties of such nickel alloy deposits significantly and give rise to (heat-resistant) paramagnetic nickel alloys. The incorporation of high phosphorous amounts (e.g. 10 wt.-% or more) also reduces the saturation magnetization and acts demagnetizing. Even more preferably, the at least one reducing agent is selected to be a hypophosphite salt for such salts being cost effective and easy to use. The concentration of the at least one reducing agent is generally in molar excess of the amount sufficient to reduce the nickel ions and the further reducible metal ions in the electroless nickel alloy plating bath. The concentration of the reducing agent preferably ranges from 0.01 mol/L to 3.0 mol/L, more preferably from 0.1 mol/L to 1 mol/L.

The electroless nickel alloy plating bath comprises at least three (different) complexing agents CA1, CA2 and CA3 wherein each of CA1, CA2 and CA3 is independently selected from the group consisting of compounds having at least two carboxylic acid moieties, the respective salts thereof (e.g. carboxylates) as well as mixtures of the aforementioned according to the invention.

At least one of the three complexing agents CA1, CA2 or CA3 is a compound having at least three carboxylic acid moieties or a respective salt thereof. Said compounds having at least two (or three) carboxylic acid moieties are aliphatic compounds, preferably C2-C12-aliphatic compounds, more preferably C2-C8-aliphatic compounds. Aliphatic compounds include acyclic or cyclic, saturated or unsaturated carbon compounds excluding aromatic compounds; the aliphatic compounds preferably are non-cyclic.

Functionalizations may theoretically be obtained by replacing at least one hydrogen by a functional group. Said optional functional groups are preferably selected from hydroxy (-OH), amino (-NH$_2$), halides, olefinic double bonds (-C=C-) and triple bonds (-C≡C-).The latter two naturally require two hydrogen atoms of adjacent carbon atoms to be theoretically replaced. More preferably, the optional functional group selected from the group consisting of hydroxy and double bonds. Even more preferably, the optional functional group is a hydroxy group.

The electroless nickel alloy plating bath according to the invention comprises at least three complexing agents CA1, CA2 and CA3 that are independently selected from the group consisting of unfunctionalized and functionalized aliphatic dicarboxylic acids, unfunctionalized and functionalized aliphatic tricarboxylic acids, the respective salts thereof as well as mixtures of the aforementioned. In the present invention, the complexing agents CA1 and CA2 are selected from above group and complexing agent CA3 is selected from the group consisting of unfunctionalized and functionalized aliphatic tricarboxylic acids, the respective salts thereof as well as mixtures of the aforementioned. The at least three complexing agents CA1, CA2 and CA3 according to the invention are independently selected from the group consisting of unfunctionalized and functionalized aliphatic dicarboxylic acids, unfunctionalized and functionalized aliphatic tricarboxylic acids, the respective salts thereof as well as mixtures of the aforementioned. In the present invention, the complexing agents CA1 and CA2 are selected from said group and complexing agent CA3 is selected from the group consisting of unfunctionalized and functionalized aliphatic tricarboxylic acids, the respective salts thereof as well as mixtures of the aforementioned.

According to the present invention, at least the complexing agent CA1 is an unfunctionalized aliphatic C2-C12-dicarboxylic acid or a salt thereof. Even more preferably, it is an unfunctionalized aliphatic C3-C6-dicarboxylic acid or a salt thereof. Yet even more preferably, the complexing agent CA1 is selected from the group consisting of malonic acid, succinic acid, glutaric acid, adipic acid, maleic acid, fumaric acid, glutaconic acid, itaconic acid, salts thereof and mixtures of the aforementioned. Most preferably, the complexing agent CA1 is malonic acid or a salt thereof.

According to the present invention, at least the complexing agent CA2 is a functionalized or unfunctionalized (preferably functionalized) aliphatic C3-C12-dicarboxylic acid or a salt thereof, preferably a functionalized or unfunctionalized (preferably functionalized) aliphatic C4-C6-dicarboxylic acid or a salt thereof. More preferably, the complexing agent CA2 comprises at least one hydroxy group (and is thus hydroxy-funtionalized). Even more preferably, the complexing agent CA2 is a hydroxy-functionalized aliphatic C4-C6-dicarboxylic acid or a salt thereof. Yet even more preferably, the complexing agent CA2 is selected from the group consisting of malic acid, tartaric acid, 1-hydroxyglutaric acid, 2-hydroxyglutaric acid, 1-hydroxyadipic acid, 2-hydroxyadipic acid, 3-hydroxyadipic acid, salts thereof and mixtures of the aforementioned. Most preferably, the complexing agent CA2 is malic acid or a salt thereof. According to the present invention, at least the complexing agent CA3 is a functionalized or unfunctionalized aliphatic C5-C12-tricarboxylic acid or a salt thereof, preferably a functionalized or unfunctionalized aliphatic C6-C8-tricarboxylic acid or a salt thereof. More preferably, the complexing agent CA3 is selected from the group consisting of citric acid, isocitric acid, aconitic acid, propane-1,2,3-tricarboxylic acid, salts thereof and mixtures of the aforementioned. Most preferably, the complexing agent CA3 is citric acid or a salt thereof.

Preferably, the concentration of the complexing agent CA1 ranges from 50 to 300 mmol/L, more preferably from 75 to 250 mmol/L and even more preferably from 90 to 200 mmol/L. Preferably, the concentration of the complexing agent CA2 ranges from 50 to 200 mmol/L, more preferably from 60 to 180 mmol/L and even more preferably from 70 to 150 mmol/L. Preferably, the concentration of the complexing agent CA3 ranges from 15 to 100 mmol/L, more preferably from 30 to 80 mmol/L and even more preferably from 35 to 55 mmol/L. Preferably, the total concentration of the complexing agents CA1, CA2 and CA3 is at least 0.15 mol/L, more preferably at least 0.20 mol/L and even more preferably at least 0.22 mol/L. Above minimum concentrations of the complexing agents CA1, CA2 and CA3 typically ensures good (para-)magnetic properties of the nickel alloy deposits which are not lost at elevated temperatures although in some cases concentrations below above thresholds proved sufficient to obtain said effect.

Preferably, the ratio of the total concentration of complexing agents CA1, CA2 and CA3 to the concentration of nickel ions to ranges from 4/1 to 8/1.

Preferably, the electroless nickel alloy plating bath is free of (intentionally added) unfunctionalized and functionalized (in particular hydroxy-functionalized) monocarboxylic acids such as lactic acid. Said monocarboxylic acids in some cases disadvantageously seem to affect the magnetic properties of the formed nickel alloy deposits.

The electroless nickel alloy plating bath according to the invention preferably is an aqueous solution. The term "aqueous solution" means that the prevailing liquid medium, which is the solvent in the solution, is water. Further liquids, that are miscible with water, as for example alcohols and other polar organic liquids, that are miscible with water, may be added. It is preferred that at least 95 wt.-%, more preferably 99 wt.-%, of all solvents used is water because of its ecologically benign character. The electroless nickel alloy plating bath according to the invention may be prepared by dissolving all components in aqueous liquid medium, preferably in water.

The electroless nickel alloy plating bath according to the invention may be acidic, neutral or alkaline. An acidic or an alkaline pH adjustor such as a (mineral) acid or a base may be selected from a wide range of materials such as ammonia, ammonium hydroxide, sodium hydroxide, hydrochloric acid, sulfuric acid and the like. The pH of the electroless nickel alloy plating bath according to the invention may range from about 2 to 12. In one embodiment, the electroless nickel alloy plating bath according to the invention has preferably a neutral or acidic pH value. This is particularly useful if molybdenum ions and/or rhenium ions are selected as further reducible metal ions. More preferably, the pH value of the acidic electroless nickel alloy plating bath according to the invention ranges from 3.5 to 7, even more preferably from 3.5 to 6.5, yet even more preferably from 4.0 to 6.0, most preferably from 4.4 to 5.6 allowing for high stability of said bath and optimal results in terms of paramagnetic properties (including their maintenance at elevated temperatures) of the nickel alloy deposits formed from such bath. If tungsten ions are selected as the sole further reducible metal ions, it is advantageous to use a pH range of 8 to 10.

Other additives may be included in the electroless nickel alloy plating bath according to the invention such as pH buffers, wetting agents, accelerators, brighteners, additional stabilizing agents which are known in the art, plating rate modifiers such as those disclosed in European patent application EP 3 034 650 A1.

In one embodiment of the present invention, the electroless nickel alloy plating bath according to the invention optionally contains further metal stabilizing agents such as lead ions, copper ions, selenium ions, tin ions, bismuth ions and antimony ions. The concentration of said metal ions can vary and e.g. ranges from 0.1 to 100 mg/l, preferably from 0.1 to 50 mg/l, more preferably from 0.1 to 10 mg/l. Preferably, said metal stabilizing agents are not contained in the electroless nickel alloy plating bath for ecological reasons and to avoid undesired co-deposition of such metals for the reasons outlined hereinafter.

It is further preferred that the inventive electroless nickel alloy plating bath is free of thiourea which is conventionally used as stabilizing agent for electroless nickel plating baths because of its toxicity and ecological concerns.

It is advantageous that the electroless nickel alloy plating bath according to the invention does not require the use of an optional stabilizing agent and is also stable to plate-out without such stabilizing agent.

Method according to the Invention

In step A) of the method according to the invention, the substrate comprising the at least one surface is provided.

Various kinds of substrates can be nickel alloy plated with the electroless nickel alloy plating bath according to the invention and the method according to the invention. Preferably, metallic substrates are used in the method according to the invention. The metallic substrates to be nickel alloy plated are preferably selected from the group consisting of copper, zinc, silver, palladium, iron, iridium, tin, aluminum, nickel, alloys thereof and mixtures of the aforementioned; aluminum or aluminum alloy such as aluminum magnesium substrates are more preferably used as they are typically employed as base material in the manufacturing of rigid memory disks. Metallic substrates can be made entirely of metal or they comprise at least one surface made of metal. Such a surface made of metal may also be one or more palladium activation layers typically employed to render electrically non-conductive surfaces such as glass, plastic or ceramics receptive for nickel alloy plating.

The substrate is optionally pretreated prior to step B). Such pretreatments are known in the art. Typical pretreatments include etching, cleaning, zincation and activation steps. Useful pretreatments may improve the plating results by removing undesired dirt or oxides from the surface of the substrate. Activation of a surface is usually understood as deposition of a thin and possibly discontinuous layer of for example palladium on an otherwise electrically non-conductive surface to render said surface suitable for nickel alloy plating. Pretreatments may vary widely depending on the substrate provided. Some guidance can exemplarily be found in WO 2015/161959 A1 (page 13, line 11 to page 15, line 30).

In step B) of the method according to the invention, the at least one surface of the substrate is contacted with the electroless nickel alloy plating bath according to the invention.

The substrate to be nickel alloy plated may be plated to the desired thickness and deposit quantity by contacting the substrate with the electroless nickel alloy plating bath according to the invention.

The inventive electroless nickel alloy plating bath may be maintained over a temperature range of 20 °C to 100 °C, preferably 70 °C to 95 °C, more preferably 85 °C to 95 °C, even more preferably 88 °C to 93 °C during deposition.

The substrate may be contacted with the inventive electroless nickel alloy plating bath for any period of time sufficient to plate the desired thickness of the nickel alloy deposit. The thickness of the nickel alloy deposit depends *inter alia* on the desired use of said deposit or the product containing said deposit. As a non-limiting example, a contact duration ranging from 30 to 180 min, preferably from 40 to 90 min and more preferably from 60 to 75 min is often considered sufficient for the use in the manufacturing of rigid memory disks.

A thickness of the nickel alloy deposit of up to 100 $\mu$m, or higher may be formed. Preferably, the thickness of the nickel alloy deposits varies ranging from 1 to 60 $\mu$m. The thickness depends on the technical application and can be higher or lower for some applications. For example, if the nickel alloy deposit is to provide a corrosion resistant coating, a thickness ranging from 30 to 60 $\mu$m is typically desired, while for electronics applications a thickness of ranging from 1 to 15 $\mu$m is applied. In the technical area of rigid memory disks, the thickness of the nickel alloy deposits preferably ranges from 5 to 20 $\mu$m, more preferably from 7 to 16 $\mu$m. In the technical area of semi-conductors, the thickness of the nickel or nickel-phosphorus deposits preferably ranges from 1 to 5 $\mu$m. Thicknesses of nickel alloy deposits may be measured with x-ray fluorescence (XRF) which is known in the art.

Various means of contacting the substrate with the inventive electroless nickel alloy plating bath are known in the art. For example, the substrate can be entirely or partially immersed into the inventive electroless nickel alloy plating bath, the inventive electroless nickel alloy plating bath can be sprayed or wiped thereon.

Optionally, the inventive electroless nickel alloy plating bath is agitated before and/or during plating. Agitation may be accomplished for example by mechanical movement of the inventive electroless nickel alloy plating bath like shaking, stirring or continuously pumping of the liquids or intrinsically by ultrasonic treatment, by elevated temperatures or by gas feeds (such as purging the aqueous plating bath with an inert gas or air).

Industry requirements are that the plating rate is preferably at least 2.5 $\mu$m/h to allow for sufficiently economic processes to be run. More preferably, the plating rate ranges from 2.5 to 7.0 $\mu$m/h, even more preferably from 3.0 to 6.5 $\mu$m/h. Such plating rates allow for sufficiently economic processes while improving the desired paramagnetic properties to be maintained at elevated temperatures.

The method according to the invention optionally comprises rinsing steps, preferably with water, and/or drying steps. The parameters above for the electroless nickel alloy plating bath according to the invention and methods of the present invention are only provided to give general guidance for practicing the invention. The inventive electroless nickel alloy plating bath can be used to deposit a nickel alloy on a surface of a substrate.

Nickel Alloy Deposits according to the Invention and their Use

The present invention further concerns a nickel alloy deposit obtainable by deposition from the electroless nickel alloy plating bath according to the invention. Surprisingly, although such deposits seem to be identical in terms of elemental composition (*i.e.* the contents of nickel, further reducible metal ions and optionally phosphorus and/or boron) and other analytical methods to deposits known in the art, the nickel alloy deposits formed from electroless nickel alloy plating bath according to the invention show superior magnetic properties making them particularly suitable for use in (high-end) rigid memory disks, especially if using heat-assisted magnetic recording.

The content of the further reducible metal in the nickel alloy deposit preferably ranges from 0.5 to 5.0 wt.-%, more preferably from 0.8 to 4.0 wt.-% and even more preferably from 1.0 to 3.0 wt.-% and yet even more preferably from 1.2 to 2.5 wt.-%.

Preferably, the content of phosphorus and/or boron (more preferably of phosphorus alone) in the nickel alloy deposit exceeds 10 wt.-%, more preferably it ranges from 10.0 to 16.0 wt.-%, even more preferably from 11.0 to 15.0 wt.-% and yet even more preferably from 12.0 to 14.5 wt.-%.

The remainder of the nickel alloy deposit which is neither further reducible metal or phosphorus and/or boron is usually mainly nickel (usually $\geq$ 98 wt.-%, preferably $\geq$ 99 wt.-%, more preferably $\geq$ 99.9 wt.-% of said remainder) disregarding trace impurities commonly present in technical raw materials and co-deposited other materials such as those derived from e.g. organic impurities and stabilizing agents. Most preferably, the nickel alloy deposits according to the invention consist of nickel, molybdenum and phosphorus (disregarding trace impurities commonly present in technical raw materials and involuntarily co-deposited other materials such as those derived from e.g. organic impurities and optional stabilizing agents).

Above preferred ranges for the elements in the inventive nickel alloy deposits advantageously result in particularly highly stable paramagnetic properties to very high temperatures such as 400 °C, even for a prolonged period of time, such as 60 min or more, preferably at least 120 min or more, more preferably at least 240 min or more.

Typically, the inventive nickel alloy layers have a significant lower magnetic saturation after being heat treated at 400°C for 60 min or longer compared to those known from the state of the art.

The present invention further relates to the use of nickel alloy deposit obtainable by deposition from the electroless nickel alloy plating bath according to the invention. Such nickel alloy deposits can be used in data storage devices, preferably in rigid memory disks. Preferably, such nickel alloy deposits are used as non-magnetizable layers in such data storage devices, preferably in rigid memory disks.

The present invention further concerns data storage devices, typically magnetic data storage devices, preferably rigid memory disks, preferably using heat-assisted magnetic recording (HAMR), comprising at least one nickel alloy deposit according to the invention, wherein the inventive nickel deposit is preferably used as base layer for the subsequent deposited recordable ferromagnetic storage layer.

In another preferred embodiment of the present invention, the substrates are used in the manufacturing of rigid memory disks.

Details and preferred embodiments described for one aspect of the present invention apply *mutatis mutandis* to the other aspects. To avoid unnecessary repetition, they are not described time and again.

The invention will now be illustrated by reference to the following non-limiting examples.

## Examples

Commercial products were used as described in the technical datasheet available on the date of filing of this specification unless stated otherwise hereinafter. Alklean AC 2 (acidic etcher) and AlumSeal™ 650 (alkaline solution comprising zinc ions to provide a zincation of an aluminum comprising surface) are products of Atotech Deutschland GmbH.

Aluminum/magnesia alloy sheets of 0.2 dm² area were used in all plating experiments described hereinafter. The sheets were pretreated as described hereinafter before nickel alloy plated.

| | | | |
|---|---|---|---|
| 1) Alklean AC 2 | 5 min | RT | etching step |
| 2) AlumSeal™ 650 | 30 s | RT | alkaline zincation step |
| 3) nitric acid (50 wt.-% in DI water) | 30 s | RT | etching step |
| 4) AlumSeal™ 650 | 15 s | RT | alkaline zincation step |

Determination of thickness of the metal or metal alloy deposits and plating rate

The phosphorus content and deposit thickness were measured at 5 points of each substrate by XRF using the XRF instrument Fischerscope XDV-SDD (Helmut Fischer GmbH, Germany). By assuming a layered structure of the deposit the layer thickness can be calculated from such XRF data. The plating rate was calculated by dividing the obtained layer thickness by the time necessary to obtain said layer thickness.

Determination of loss of paramagnetism at certain temperatures

This test is to evaluate the loss or maintenance of the (para-)magnetic properties of the nickel alloys at elevated temperatures. The nickel alloy plated substrates were subjected to the given temperatures in an oven for 10 min to 60 min and after each 10 min interval, they were tested with a bar magnet (NdFeB) to check if they became magnetic. If not, the heating was continued until 60 min were reached.

Vibrating sample magnetometer (VSM) measurements

Magnetization was detected by VSM measurements where samples of 3 mm diameter were magnetized in a uniform magnetic field. By mechanically vibrating the samples, the induced current or changing flux in the coil was measured. The vibrating sample magnetometer used in the experiments comprised as essential component a lock-in magnifier supplied by EG&G Princeton Applied Research.

Adhesion of the nickel alloy

The adhesion of the nickel alloys was evaluated visually when samples of 3 mm diameter were stamped out of the nickel alloy plated substrates. In case of insufficient adhesion, the nickel alloy layer would have peeled off during stamping. Substrates with sufficient adhesion are marked "+" in the following examples while those which showed insufficient adhesion are labelled "-".

pH value measurement

pH values were measured with a pH meter (WTW, Typ pH 3110, electrode: SenTix®41, gel electrode with temperature sensor, reference electrolyte: 3 mol/l KCl) at 25 °C. The measurement was continued until the pH value became constant, but in any case at least for 2 min. The pH meter was calibrated with buffer solution standards for pH values at 2, 4 and 7 supplied by Fluka and Certipur prior to use.

Composition of the nickel alloys

X-ray photo electron spectroscopy (VersaProbe XPS, Physical Electronics GmbH) was used to measure the composition of the nickel alloys.

Comparative examples

1 L each of nickel alloy plating baths containing the following components were set up:

- nickel ions                    3 g/L (51.1 mmol/L, provided as nickel sulfate),
- sodium hypophosphite           30 g/L (0.341 mol/L),
- molybdenum ions date),         40 mg/L ($4.2*10^{-4}$ mol/L, provided as sodium molyb-
- complexing agents              in concentrations (in mmol/L) as given in table 1,
- pH adjusted to the values given in table 1 with ammonia solution (25 wt.-% in water)

The temperature of the nickel alloy plating bath was set to 88 °C and substrates were immersed into the baths for 240 min. The thus plated substrates were then tested for the maintenance of the paramagnetic properties at 310 °C, 320 °C and 330 °C as described above.

Table 1: Comparative examples 1-9.

| # | 1 | 2 | 3 | 4 | 5 | 6 | 7 | 8 | 9 |
|---|---|---|---|---|---|---|---|---|---|
| Citric acid | 26 | 52 | | | | | | | |
| Malic acid | 149.3 | 149.3 | 149.3 | 149.3 | 149.3 | 149.3 | 149.3 | 149.3 | 149.3 |
| Glycine | | | 133.3 | | | | | | |
| Lactic acid | | | | 166.7 | | | | 83.3 | 333.3 |
| Sodium gluconate | | | | | 45.9 | 45.9 | | | |

(continued)

| # | 1 | 2 | 3 | 4 | 5 | 6 | 7 | 8 | 9 |
|---|---|---|---|---|---|---|---|---|---|
| Malonic acid | | | | | | | 192.1 | 192.1 | 192.1 |
| pH value | | | | | | | | | |
| Plating rate | 5.6 | 4.7 | 6.8 | 4.1 | 8.8 | 5.6 | 6.0 | 0* | 0* |
| Phosphorus content [wt.-%] | 13.3 | 13.3 | 12.4 | 12.8 | 12.4 | 12.1 | 13.3 | - | - |
| Molybdenum content [wt.-%] | 0.5 | 1.2 | 1.0 | 0.4 | 0.4 | 0.3 | 1.6 | - | - |
| Adhesion of the nickel alloy | + | + | + | + | + | + | + | n.d. | n.d. |
| Loss of paramagnetism at 310 °C after | 50 min | 60 min | 50 min | 40 min | 0 min | 30 min | 60 min | - | - |
| Loss of paramagnetism at 320 °C after | 30 min | 60 min | 30 min | 20 min | 0 min | 20 min | 50 min | - | - |
| Loss of paramagnetism at 330 °C after | 10 min | 30 min | 10 min | 0 min | 0 min | 0 min | 40 min | - | - |
| +: good adhesion, -: bad adhesion; n.d.: not determined; * no plating observed | | | | | | | | | |

Comparative examples 1 to 7 used two dicarboxylic acids or one dicarboxylic acid and a hydroxy-functionalized monocarboxylic acid or tricarboxylic acid as suggested in JP H05-263259. Comparative examples 8 and 9 employed two dicarboxylic acids and a further hydroxy-functionalized monocarboxylic acid as complexing agent. Obviously, such nickel alloy plating baths of above comparative examples provided nickel alloys having little conservation of the initial magnetic properties when subjected to elevated temperatures such as those given in table 1 or do not allow for any plating to take place (comparative examples 8 and 9). This loss of paramagnetism of the obtained nickel alloys makes them unsuitable for use in rigid memory disks based on the HAMR technology, prolonged maintenance of the paramagnetic properties at elevated temperatures being a prerequisite therefor. None of above nickel alloy deposits was tested at higher temperatures since they all lost their paramagnetic properties within the tested period of time at 330 °C.

Inventive examples

1 L each of electroless nickel alloy plating baths containing the following components were set up:

-    nickel ions in concentrations (in mmol/L) as given in table 2 (provided as nickel sulfate),

-    30 g/L (0.341 mol/L) sodium hypophosphite,

-    40 mg/L ($4.2*10^{-4}$ mol/L) molybdenum ions (provided as sodium molybdate),

-    malonic acid as complexing agent CA1 in concentrations (in mmol/L) as given in table 2,

-    malic acid as complexing agent CA2 in concentrations (in mmol/L) as given in table 2, and

-    citric acid as complexing agent CA3 in concentrations (in mmol/L) as given in table 2,

-    pH adjusted to the values given in table 2 with ammonia solution (25 wt.-% in water)

The temperature of the nickel alloy plating bath was set to the temperature given in table 2 and substrates were immersed into the baths to plate nickel alloys thereon. The plating was carried out for a time sufficient to plate at least

7 μm, typically for at least 120 min.

Table 2: Inventive examples 1-7.

| | 1 | 2 | 3 | 4 | 5 | 6 | 7 |
|---|---|---|---|---|---|---|---|
| Nickel ions | 51.1 | 51.1 | 51.1 | 51.1 | 51.1 | 51.1 | 68.1 |
| Malonic acid | 74.6 | 74.6 | 96.0 | 96.0 | 96.0 | 192.0 | 192.0 |
| Malic acid | 96.0 | 96.0 | 149.3 | 149.3 | 149.3 | 149.3 | 149.3 |
| Citric acid | 52.0 | 52.0 | 39.0 | 52.0 | 52.0 | 39.0 | 39.0 |
| n (all complexing agents) | 222.6 | 222.6 | 284.0 | 297.0 | 297.0 | 380.3 | 380.3 |
| $\dfrac{n(\text{all complexing agents})}{n(\text{nickel ions})}$ | 4.4 | 4.4 | 5.6 | 5.8 | 5.8 | 7.4 | 5.6 |
| T [°C] | 92 | 92 | 88 | 90 | 88 | 92 | 92 |
| pH | 5.0 | 5.3 | 5.3 | 5.3 | 5.6 | 5.0 | 5.0 |
| Plating rate | 4.6 | 5.0 | 3.6 | 3.0 | 3.4 | 3.4 | 6.3 |
| Adhesion of the nickel alloy | + | + | + | + | + | + | + |
| Phosphorus content [wt.-%] | 13.3 | 13.3 | 13.1 | 13.7 | 13.6 | 14.3 | 14.3 |
| Molybdenum content [wt.-%] | 1.4 | 1.3 | 1.1 | 2.3 | 2.1 | 1.7 | 1.6 |
| 330 °C | 60 min | 60 min | 60 min | 60 min | 60 min | 60 min | 60 min |
| 350 °C | 60 min | 60 min | 60 min | 60 min | 60 min | 60 min | 60 min |
| 400 °C | 60 min | 60 min | 60 min | 60 min | 60 min | 60 min | 60 min |
| +: good adhesion | | | | | | | |

The nickel alloy deposits obtained from inventive examples 1 to 7 all showed excellent paramagnetic properties which were not lost when subjected to elevated temperatures for 60 min. This makes them particularly suitable for use in the manufacturing of HAMR based rigid memory disks. This finding was irrespective of the total molar ratios of amount of substance of all complexing agents CA1, CA2 and CA3 in relation to the amount of substance of nickel ions in the inventive electroless nickel alloy plating baths.

Moreover, the amount of phosphorus and molybdenum, the pH and the plating temperature could be varied without any loss of paramagnetic properties. The inventive electroless nickel alloy plating baths also showed a sufficient plating rate and stability (e.g. against plate-out).

VSM measurements

1 L of nickel alloy plating baths containing the following components were set up:

- 51.1 mmol/L nickel ions (provided as nickel sulfate),
- 0.341 mol/L sodium hypophosphite,
- 417 μmol/L molybdenum ions (provided as sodium molybdate),
- 192 mmol/L malonic acid as complexing agent CA1,
- 149.3 mmol/L malic acid as complexing agent CA2, and
- 39.1 mmol/L citric acid as complexing agent CA3,
- pH value was adjusted to 5.3 with ammonia solution (25 wt.-% in water)

A substrate was immersed into said bath at 91 °C for 180 min and a deposit thickness of 10.3 μm was obtained. The deposit comprised 2.5 wt.-% molybdenum and 13.4 wt.-% phosphorus with the remainder being nickel.

As a comparative example a substrate was plated with a nickel alloy plating bath as described in US 8,557,100 B2, table 1, which did not contain three complexing agents independently selected from the group consisting of unfunctionalized and functionalized compounds having at least two carboxylic acid moieties, the respective salts thereof as well as mixtures of the aforementioned. Samples of both nickel alloys (inventive and comparative) were heated for 60 min to 310 °C and 400 °C, respectively, and then subjected to VSM measurements as described above. As a further test, samples as plated were measured accordingly. The results are depicted in Figure 1.

The nickel alloys obtained from both baths showed paramagnetic (non-magnetic) properties after plating (without any heat treatment). After being treated for 60 min at 310 °C, both nickel alloy deposits retained their magnetic properties. A striking difference was observed when the nickel alloy deposits were treated at even higher temperatures of 400 °C. Then, the nickel alloy deposits of the comparative bath became superparamagnetic and thus lost their magnetic properties. This makes them unsuitable for use in HAMR rigid memory disks. Contrary to that, the nickel alloy deposits of the inventive electroless nickel alloy plating bath still showed paramagnetic behavior even after being subjected to 400 °C for 60 min. This high stability of the paramagnetism of the inventive nickel alloys to elevated temperatures makes them particularly suitable for use in rigid memory disks using the advanced HAMR technology.

Other embodiments of the present invention will be apparent to those skilled in the art from a consideration of this specification or practice of the invention disclosed herein. It is intended that the specification and examples be considered as exemplary only, with the true scope of the invention being defined by the following claims only.

**Claims**

1. An electroless nickel alloy plating bath comprising

   a) nickel ions;
   b) molybdenum ions;
   c) at least one reducing agent suitable to reduce the nickel ions and the further reducible metal ions to their respective metallic state, preferably selected from the group consisting of hypophosphorous acid, hypophosphite salts and mixtures of the aforementioned ; and
   wherein the electroless nickel alloy plating bath further comprises
   d) at least three complexing agents CA1, CA2 and CA3 wherein each of CA1, CA2 and CA3 is independently selected from the group consisting of compounds having at least two carboxylic acid moieties, the respective salts thereof as well as mixtures of the aforementioned,
   **characterized in that**

   - the complexing agent CA1 is an unfunctionalized aliphatic C2-C12-dicarboxylic acid or a salt thereof,
   - the complexing agent CA2 is a hydroxy-functionalized aliphatic C3-C12-dicarboxylic acid or a salt thereof,
   - the complexing agent CA3 is a functionalized or unfunctionalized aliphatic C5-C12-tricarboxylic acid or a salt thereof.

2. The electroless nickel alloy plating bath according to claim 1 **characterized in that** the complexing agent CA1 is an unfunctionalized aliphatic C3-C6-dicarboxylic acid or a salt thereof.

3. The electroless nickel alloy plating bath according to claim 2 **characterized in that** the complexing agent CA1 is selected from the group consisting of malonic acid, succinic acid, glutaric acid, adipic acid, maleic acid, fumaric acid, glutaconic acid, itaconic acid, salts thereof and mixtures of the aforementioned.

4. The electroless nickel alloy plating bath according to any one of the preceding claims **characterized in that** the complexing agent CA2 is a hydroxy- functionalized aliphatic C4-C6-dicarboxylic acid or a salt thereof.

5. The electroless nickel alloy plating bath according to claim 4 **characterized in that** the complexing agent CA2 is selected from the group consisting of malic acid, tartaric acid, 1-hydroxyglutaric acid, 2-hydroxyglutaric acid, 1-hydroxyadipic acid, 2-hydroxyadipic acid, 3-hydroxyadipic acid, salts thereof and mixtures of the aforementioned.

6. The electroless nickel alloy plating bath according to any one of the preceding claims **characterized in that** the complexing agent CA3 is a functionalized or unfunctionalized aliphatic C6-C8-tricarboxylic acid or a salt thereof.

7. The electroless nickel alloy plating bath according to claim 6 **characterized in that** the complexing agent CA3 is selected from the group consisting of citric acid, isocitric acid, aconitic acid, propane-1,2,3-tricarboxylic acid, salts thereof and mixtures of the aforementioned.

8. The electroless nickel alloy plating bath according to any one of the preceding claims **characterized in that** the nickel plating bath is free of unfunctionalized and functionalized monocarboxylic acids.

9. The electroless nickel alloy plating bath according to any one of the preceding claims **characterized in that** the pH value ranges from 4.4 to 5.6.

10. Use of an electroless nickel alloy plating bath according to any one of claims 1 to 9 to deposit a nickel alloy onto at least one surface of at least one substrate.

11. A method for depositing nickel alloys on at least one surface of a substrate comprising in this order the following method steps

A) providing the substrate comprising the at least one surface;
B) contacting the at least one surface of the substrate with an electroless nickel alloy plating bath according to any one of claims 1 to 8 and

thereby depositing a nickel alloy on the at least one surface of the substrate.

**Patentansprüche**

1. Bad für die stromlose Abscheidung einer Nickellegierung, umfassend

a) Nickelionen;
b) Molybdänionen;
c) mindestens ein sich für die Reduktion der Nickelionen und der weiteren reduzierbaren Metallionen in ihren jeweiligen metallischen Zustand eignendes Reduktionsmittel, das vorzugsweise aus der Gruppe bestehend aus hypophosphoriger Säure und Hypophosphitsalzen und Mischungen der Vorgenannten ausgewählt ist; und

wobei das Bad für die stromlose Abscheidung einer Nickellegierung ferner Folgendes umfasst:
d) mindestens drei Komplexbildner CA1, CA2 und CA3, wobei CA1, CA2 und CA3 jeweils unabhängig aus der Gruppe bestehend aus Verbindungen mit mindestens zwei Carbonsäureteilstrukturen, den jeweiligen Salzen davon und Mischungen der Vorgenannten ausgewählt sind,
**dadurch gekennzeichnet, dass**

- es sich bei dem Komplexbildner CA1 um eine unfunktionalisierte aliphatische C2-C12-Dicarbonsäure oder ein Salz davon handelt,
- es sich bei dem Komplexbildner CA2 um eine hydroxyfunktionalisierte aliphatische C3-C12-Dicarbonsäure oder ein Salz davon handelt,
- es sich bei dem Komplexbildner CA3 um eine funktionalisierte oder unfunktionalisierte aliphatische C5-C12-Tricarbonsäure oder ein Salz davon handelt.

2. Bad für die stromlose Abscheidung einer Nickellegierung nach Anspruch 1, **dadurch gekennzeichnet, dass** es sich bei dem Komplexbildner CA1 um eine unfunktionalisierte aliphatische C3-C6-Dicarbonsäure oder ein Salz davon handelt.

3. Bad für die stromlose Abscheidung einer Nickellegierung nach Anspruch 2, **dadurch gekennzeichnet, dass** der Komplexbildner CA1 aus der Gruppe bestehend aus Malonsäure, Bernsteinsäure , Glutarsäure, Adipinsäure, Maleinsäure, Fumarsäure, Glutaconsäure, Itaconsäure, Salzen davon und Mischungen der Vorgenannten ausgewählt ist.

4. Bad für die stromlose Abscheidung einer Nickellegierung nach einem der vorhergehenden Ansprüche, **dadurch gekennzeichnet, dass** es sich bei dem Komplexbildner CA2 um eine hydroxyfunktionalisierte aliphatische C4-C6-Dicarbonsäure oder ein Salz davon handelt.

5. Bad für die stromlose Abscheidung einer Nickellegierung nach Anspruch 4, **dadurch gekennzeichnet, dass** der Komplexbildner CA2 aus der Gruppe bestehend aus Malonsäure, Weinsäure, 1-Hydroxyglutarsäure, 2-Hydroxyglutarsäure, 1-Hydroxyadipinsäure, 2-Hydroxyadipinsäure, 3-Hydroxyadipinsäure, Salzen davon und Mischungen der Vorgenannten ausgewählt ist.

6. Bad für die stromlose Abscheidung einer Nickellegierung nach einem der vorhergehenden Ansprüche, **dadurch gekennzeichnet, dass** es sich bei dem Komplexbildner CA3 um eine funktionalisierte oder unfunktionalisierte aliphatische C6-C8-Tricarbonsäure oder ein Salz davon handelt.

7. Bad für die stromlose Abscheidung einer Nickellegierung nach Anspruch 6, **dadurch gekennzeichnet, dass** der Komplexbildner CA3 aus der Gruppe bestehend aus Citronensäure, Isocitronensäure, Aconitsäure, Propan-1,2,3-tricarbonsäure, Salzen davon und Mischungen der Vorgenannten ausgewählt ist.

8. Bad für die stromlose Abscheidung einer Nickellegierung nach einem der vorhergehenden Ansprüche, **dadurch gekennzeichnet, dass** das Bad für die Abscheidung von Nickel frei von unfunktionalisierten und funktionalisierten Monocarbonsäuren ist.

9. Bad für die stromlose Abscheidung einer Nickellegierung nach einem der vorhergehenden Ansprüche, **dadurch gekennzeichnet, dass** der pH-Wert 4,4 bis 5,6 beträgt.

10. Verwendung eines Bads für die stromlose Abscheidung einer Nickellegierung nach einem der Ansprüche 1 bis 9 zur Abscheidung einer Nickellegierung auf mindestens eine Oberfläche von mindestens einem Substrat.

11. Verfahren zur Abscheidung von Nickellegierungen auf mindestens eine Oberfläche von einem Substrat, umfassend die folgenden Verfahrensschritte in dieser Reihenfolge:

A) Bereitstellen des die mindestens eine Oberfläche umfassenden Substrats;
B) Inkontaktbringen der mindestens einen Oberfläche des Substrats mit einem Bad für die stromlose Abscheidung einer Nickellegierung nach einem der Ansprüche 1 bis 8,

wodurch eine Nickellegierung auf die mindestens eine Oberfläche des Substrats abgeschieden wird.

## Revendications

1. Bain de placage d'alliage de nickel autocatalytique comprenant

a) des ions nickel ;
b) des ions molybdène ;
c) au moins un agent de réduction approprié pour réduire les ions nickel et les ions métalliques encore réductibles en leur état métallique réspéctif,
préférablement choisi dans le groupe constitué par l'acide hypophosphoreux, les sels d'hypophosphite et des mélanges de ceux-ci ; et
le bain de placage d'alliage de nickel autocatalytique comprenant en outre
d) au moins trois agents complexants CA1, CA2 et CA3,
chacun parmi CA1, CA2 et CA3 étant indépendamment choisi dans le groupe constitué par des composés possédant au moins deux fragments acide carboxylique, les sels respectifs correspondants ainsi que des mélanges de ceux-ci,
**caractérisé en ce que**

- l'agent complexant CA1 est un acide dicarboxylique aliphatique non fonctionnalisé en $C_{2-12}$ ou un sel correspondant,
- l'agent complexant CA2 est un acide dicarboxylique aliphatique fonctionnalisé par hydroxy en $C_{3-12}$ ou un sel correspondant,
- l'agent complexant CA3 est un acide tricarboxylique aliphatique fonctionnalisé ou non fonctionnalisé en $C_{5-12}$ ou un sel correspondant.

2. Bain de placage d'alliage de nickel autocatalytique selon la revendication 1 **caractérisé en ce que** l'agent complexant CA1 est un acide dicarboxylique aliphatique non fonctionnalisé en $C_{3-6}$ ou un sel correspondant.

3. Bain de placage d'alliage de nickel autocatalytique selon la revendication 2 **caractérisé en ce que** l'agent complexant CA1 est choisi dans le groupe constitué par l'acide malonique, l'acide succinique, l'acide glutarique, l'acide adipique, l'acide maléique, l'acide fumarique, l'acide glutaconique, l'acide itaconique, des sels correspondants et des mélanges de ceux-ci.

4. Bain de placage d'alliage de nickel autocatalytique selon l'une quelconque des revendications précédentes **caractérisé en ce que** l'agent complexant CA2 est un acide dicarboxylique aliphatique fonctionnalisé par hydroxy en $C_{4-6}$ ou un sel correspondant.

5. Bain de placage d'alliage de nickel autocatalytique selon la revendication 4 **caractérisé en ce que** l'agent complexant CA2 est choisi dans le groupe constitué par l'acide maléique, l'acide tartrique, l'acide 1-hydroxyglutarique, l'acide 2-hydroxyglutarique, l'acide 1-hydroxyadipique, l'acide 2-hydroxyadipique, l'acide 3-hydroxyadipique, des sels correspondants et des mélanges de ceux-ci.

6. Bain de placage d'alliage de nickel autocatalytique selon l'une quelconque des revendications précédentes **caractérisé en ce que** l'agent complexant CA3 est un acide tricarboxylique aliphatique fonctionnalisé ou non fonctionnalisé en $C_{6-8}$ ou un sel correspondant.

7. Bain de placage d'alliage de nickel autocatalytique selon la revendication 6 **caractérisé en ce que** l'agent complexant CA3 est choisi dans le groupe constitué par l'acide citrique, l'acide isocitrique, l'acide aconitique, l'acide propane-1,2,3-tricarboxylique, des sels correspondants et des mélanges de ceux-ci.

8. Bain de placage d'alliage de nickel autocatalytique selon l'une quelconque des revendications précédentes **caractérisé en ce que** le bain de placage de nickel est exempt d'acides monocarboxyliques non fonctionnalisés et fonctionnalisés.

9. Bain de placage d'alliage de nickel autocatalytique selon l'une quelconque des revendications précédentes **caractérisé en ce que** la valeur de pH se situe dans la plage de 4,4 à 5, 6.

10. Utilisation d'un bain de placage d'alliage de nickel autocatalytique selon l'une quelconque des revendications 1 à 9 pour déposer un alliage de nickel sur au moins une surface d'au moins un substrat.

11. Procédé pour le dépôt d'alliages de nickel sur au moins une surface d'un substrat comprenant dans cet ordre les étapes de procédé suivantes

A) mise à disposition du substrat comprenant l'au moins une surface ;
B) mise en contact de l'au moins une surface du substrat avec un bain de placage d'alliage de nickel autocatalytique selon l'une quelconque des revendications 1 à 8 et

ainsi, dépôt d'un alliage de nickel sur l'au moins une surface du substrat.

F I G   1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H05263259 B
- US 20110059611 A1
- EP 3034650 A1
- WO 2015161959 A1
- US 8557100 B2